# EUROPEAN PATENT APPLICATION

(11) **EP 1 806 919 A1**
(43) Date of publication of application: **11.07.2007**
(21) Application number: 06290041.0
(22) Date of filing: 05.01.2006
(51) Int. Cl.: H04N 5/783, H04N 5/00, G11B 27/00

(54) **Media delivery system with content-based trick play mode**

(71) Applicant: Alcatel Lucent, 75008 Paris (FR)
(72) Inventor: Hemmeryckx-Deleersnijder, Bart Karel, 3001 Heverlee (BE); Handekyn, Koen, 9080 Lochristi (BE)
(74) Representative: Narmon, Gisèle Marie Thérèse

(57) **Abstract**

A media delivery system simultaneously delivers a media asset stream (201) for normal play-out and a trick play stream (202) for the fast forward and rewind modes. The trick play stream (202) is a content-based summary of said media asset stream (201) instead of a dropped frame version of the media asset stream.

## Description

### Field of the Invention

The present invention generally relates to trick play streams that are used in fast forward mode and rewind mode of media delivery systems, such as video-on-demand (VoD) systems, TV broadcast systems, audio broadcast systems, multimedia delivery systems, gaming systems, etc.

### Background of the Invention

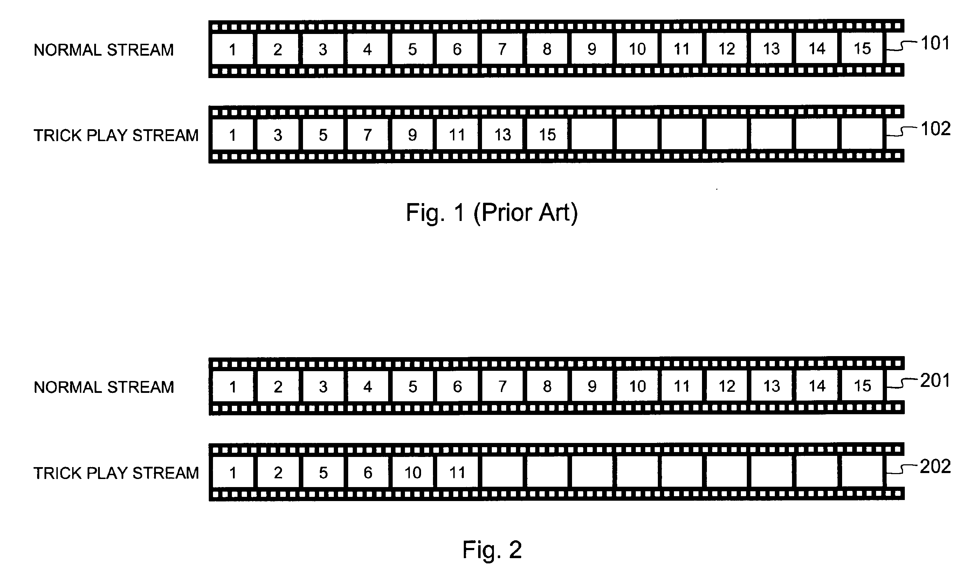

Known media delivery systems like Microsoft's IPTV system enable the user to fast forward and rewind the media stream. For instance a movie or TV shown that is delivered in a VoD system and viewed by the end user can be fast forward or rewind at various speeds. Existing systems thereto switch between a normal speed stream, i.e. the media asset stream that is normally played-out, and a so called trick play stream for fast play-out either backward or forward. The trick play stream or streams are completely separate streams that are generated and encoded before a media asset is delivered. These trick play streams are delivered simultaneously and parallel to the regular media asset stream. In the fast played trick streams, frames of the original content are typically dropped to provide the end user with a fast forward or rewind experience. The delivery and operation of a trick play stream as implemented in Microsoft's IPTV system is for instance described in a publication from Sun describing the Content Input Specification of Sun's MediaCenter software. This publication is available at the following Internet URL:
http://sunsolve.sun.com/data/802/802-3804-10/encode_spec.doc.html#506 Therein, the additional bit streams to support fast forward and rewind functions, represent the content of the normal play stream at several speeds, in either forward or reverse direction, through frame dropping. Fig. 1 of this patent application for instance shows a state-of-the-art way of streaming video where in parallel to the normal video stream 101, a trick play stream 102 is delivered, the trick play stream 102 being a copy of the normal stream 101 where one on two frames is dropped. In Fig. 1 for instance, only the odd numbered frames of the original video stream 101 are maintained in the parallel delivered trick play stream 102 hence enabling the end user to fast forward at twice the normal speed by switching from the normal stream to the trick play stream.

In browsing the media stream, the known trick play streams however provide a poor user experience. The fast forward and rewind trick streams based on frame dropping in the original media asset stream are not very efficient and the searching/browsing possibilities offered to the end user through such trick streams are poor.

It is an object of the present invention to disclose a media delivery system with fast forward and rewind capabilities that are more efficient and richer in terms of user experience then the prior art systems described above.

### Summary of the Invention

The objectives of the present invention are realised and the above mentioned drawbacks of the prior art are overcome through a media delivery system for simultaneously delivering a media asset stream for normal play-out and a trick play stream for fast forward and rewind play-out, the trick play stream being a content-based summary of the media asset stream, as defined by claim 1.

In this way, the fast played stream will be based on a media clip that gives a content-based summary of the presented media. It will offer the end user for instance the capability to search or browse through the different items of a TV show or movie. The invention will be particularly advantageous in a system where the end user can make content available to other end users through for instance a community channel in a classical VoD system, managed and controlled by the owner of the media assets that are made available.

The current invention further relates to a method for delivering a media asset stream and trick play stream as defined in claim 13.

An optional feature of the media delivery system according to the present invention is that the content-based summary in the trick play stream might be produced automatically through a summarization algorithm, as defined in claim 2.

Thus, the summaries can be made automatically via various summarization algorithms. Alternatively, the summaries are made at creation time by the creator of the media asset. In the last case, the content creator produces both the main media asset stream and the various trick media streams for the supported trick speeds.

A further optional feature of the media delivery system according to the present invention is that the media asset stream may contain indications of the portions to be used for the trick play stream, as defined by claim 3.

Thus, the content creator could indicate which parts of the main media asset stream should go into the trick media stream. These indications can then be taken into account by the automated summarization algorithms that produce the trick play stream.

As is indicated by claims 4 to 9, the content based trick play stream may contain short introductions, highlights, trailers, extra scenes or assets, director interviews, skimmed summaries, etc.

If for instance the summary in the trick play stream consists of highlights of a soccer game, the viewer will easily and quickly find the game he desires to watch because the remarkable action that he remembers will be one of the highlights in the trick play stream.

Further, as is indicated by claims 10 to 12, the media delivery system according to the present invention may be suited for delivery of video asset (e.g. a VoD system), delivery of audio assets, delivery of interactive multimedia assets, and the like.

### Brief Description of the Drawings

Fig. 1 illustrates a media delivery stream and trick play stream as delivered in a prior art system as described above; and
Fig. 2 illustrates a media delivery stream and trick play stream as delivered in a system according to the present invention.

### Detailed Description of Embodiment(s)

An instance of the media delivery system and method according to the current invention that can be used in the IPTV world is illustrated by Fig. 2. In this IPTV world, TV channels or video channels that support one or more trick play modes are supported. When the end user desires to fast forward or rewind to the next or previous chapters, he/she will switch from the normal video stream 201 to a content-based trick play stream 202 wherein summaries of the next or previous chapters are played. These summaries are contained and encoded in the trick play stream 202 which is streamed together with the main video stream 201, but is no longer made by simply dropping frames out of the main video stream 201.

The normal stream 201 in Fig. 2 for instance contains content that shows all the season's games of a certain soccer team. The user that is looking for the game where a certain player does a particular, remarkable action, desires to browse through the media efficiently, rather then just searching through traditional fast forward or rewind modes. The user therefore selects a certain play forward speed or mode (e.g. the summarization mode) as a result of which he/she will be presented the different games in a summarization mode (note that this is an example of a mode). The summarization consists of the highlights (as an example) of the different games and are captured for instance in the frames 1, 2, 5, 6, 10, 11, ... of the normal video stream 201. These frames therefore constitute the content based trick play stream 202. The remarkable action where the user is looking for will be one of the highlights as a result of which the user will be able to find quickly and efficiently the game he desires to watch. When the game is identified, the viewer can switch back immediately to the normal speed stream 201.

The summaries for the content based trick play stream according to the present invention can be made automatically via summarization algorithms. Alternatively, the summaries are made at creation time by the creator of the normal stream. The content creator could for instance indicate which portions of the normal stream should end up in which trick play mode, and these indications can be taken into account by the summarization algorithm in the streaming network node that delivers the trick play stream parallel to the normal stream.

Other than highlights, the content based trick play stream may contain short introductions, skimmed summaries, trailers, extra scenes, director interviews, other modes, etc.

Evidently, there may be one or more trick play streams delivered in conjunction with a main media stream, the number of trick play streams corresponding to the various fast forward or rewind speeds and modes which the end user can select.

Summarizing, according to the present invention, a richer end user experience will be achieved in watching/browsing video or other media delivered on demand through a media streaming system which creates and delivers at least one content based trick play stream on top of the normal media stream.

Although the present invention has been illustrated by reference to a specific embodiment, it will be apparent to those skilled in the art that various changes and modifications may be made within the spirit and scope of the invention. It is therefore contemplated to cover any and all modifications, variations or equivalents that fall within the spirit and scope of the basic underlying principles disclosed and claimed in this patent application. For example, the invention is not restricted to video delivery, but could be extended to other media such as audio, interactive multimedia, games, etc. These media may be delivered through regular channels such as broadcast or on demand channels set up by an IPTV system, or alternatively could be delivered through user-created and user-managed channels such as community channels wherein user originating content is streamed to a community of end users that subscribe to and are granted access to the community channel. The delivery system that streams the normal media stream and parallel content based trick play stream could be implemented in hardware, software or a combination of both, and might constitute a standalone function in the network, or be integrated in an access node such as a DSLAM (Digital Subscriber Line Access Multiplexer), a DLC (Digital Loop Carrier), a Fibre Aggregator, a CMTS (Cable Modem Terminating System), an edge router, an application server, an IPTV streaming node, etc. The media delivery system according to the current invention has been described by way of its functions in this patent application, since a functional description will enable any person skilled in the art of designing telecom equipment to develop various samples of workable embodiments of the media delivery equipment operating according to the principles of the current invention.

## Claims

1. A media delivery system for simultaneously delivering a media asset stream (201) for normal play-out and at least one trick play stream (202) for fast forward and/or rewind play-out,
**CHARACTERISED IN THAT** said media delivery system is adapted to deliver through said at least one trick play stream (202) at least one content-based summary of said media asset stream (201).

2. A media delivery system according to claim 1,
**CHARACTERISED IN THAT** said media delivery system comprises a summarization algorithm adapted to produce said at least one content-based summary automatically.

3. A media delivery system according to claim 1 or claim 2,
**CHARACTERISED IN THAT** said media delivery system comprises means to indicate which portions of said media asset stream (201) are to be used to produce said at least one content-based summary.

4. A media delivery system according to claim 1,
**CHARACTERISED IN THAT** said at least one content-based summary comprise one or more short introductions to media assets contained in said media asset stream (201).

5. A media delivery system according to claim 1,
**CHARACTERISED IN THAT** said at least one content-based summary comprise one or more highlights of media assets contained in said media asset stream (201).

6. A media delivery system according to claim 1,
**CHARACTERISED IN THAT** said at least one content-based summary comprise one or more trailers of media assets contained in said media asset stream (201).

7. A media delivery system according to claim 1,
**CHARACTERISED IN THAT** said at least one content-based summary comprise one or more extra assets to the media assets contained in said media asset stream (201).

8. A media delivery system according to claim 1,
**CHARACTERISED IN THAT** said at least one content-based summary comprise one or more director interviews in relation to media assets contained in said media asset stream (201).

9. A media delivery system according to claim 1,
**CHARACTERISED IN THAT** said at least one content-based summary comprise one or more skimmed summary of media assets contained in said media asset stream (201).

10. A media delivery system according to claim 1,
**CHARACTERISED IN THAT** said system is adapted to deliver video assets.

11. A media delivery system according to claim 1,
**CHARACTERISED IN THAT** said system is adapted to deliver audio assets.

12. A media delivery system according to claim 1,
**CHARACTERISED IN THAT** said system is adapted to deliver multimedia assets.

13. A media delivery method comprising delivering a media asset stream (201) for normal play-out and delivering simultaneously at least one trick play stream (202) for fast forward and/or rewind play-out,
**CHARACTERISED IN THAT** said media delivery method comprises delivering through said at least one trick play stream (202) at least one content-based summary of said media asset stream (201).
